(19) Europäisches Patentamt
European Patent Office
Office européen des brevets

(11) EP 1 406 195 A1

(12) EUROPEAN PATENT APPLICATION

(43) Date of publication:
07.04.2004 Bulletin 2004/15

(51) Int Cl.7: G06F 17/60

(21) Application number: 03255875.1

(22) Date of filing: 19.09.2003

(84) Designated Contracting States:
AT BE BG CH CY CZ DE DK EE ES FI FR GB GR HU IE IT LI LU MC NL PT RO SE SI SK TR
Designated Extension States:
AL LT LV MK

(30) Priority: 19.09.2002 US 246716

(71) Applicant: Global Nuclear Fuel-Americas, LLC
Wilmington, North Carolina 28401 (US)

(72) Inventors:
- Kropaczek, David Joseph
Kure Beach North Carolina 28449 (US)
- Russell, William Earl, II
Wilmington North Carolina 28405 (US)
- Cline, William Charles
Wilmington North Carolina 28409 (US)

(74) Representative: Pedder, James Cuthbert
London Patent Operation
General Electric International, Inc.
15 John Adam Street
London WC2N 6LU (GB)

(54) **Method and apparatus for evaluating a proposed solution to a constraint problem**

(57) In the method and apparatus for evaluating a proposed solution to a specific constraint problem, such as boiler water reactor core design, an application specific objective function is configured from a generic objective function definition, which is generic to constraint problems. The generic objective function definition is a sum of a first number of credit terms plus a sum of a second number of penalty terms. A figure of merit can then be generated for proposed solutions to the constraint problem, and used, for example, in optimizing a solution to the constraint problem.

FIG. 4

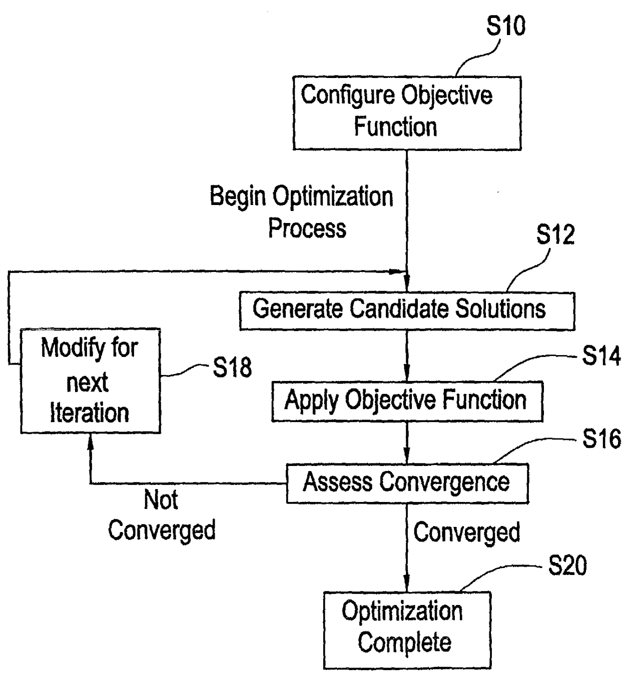




Printed by Jouve, 75001 PARIS (FR)

## Description

Most problems encountered in engineering design are nonlinear by nature and involve the determination of system parameters that satisfy certain goals for the problem being solved. Such problems can be cast in the form of a mathematical optimization problem where a solution is desired that minimizes a system function or parameter subject to limitations or constraints on the system. Both the system function and constraints are comprised of system inputs (control variables) and system outputs, which may be either discrete or continuous. Furthermore, constraints may be equalities or inequalities. The solution to a given optimization problem has either or both of the following characteristics: 1) minimizes or maximizes a desired condition or conditions, thus satisfying the optimality condition and 2) satisfies the set of constraint equations imposed on the system.

With the above definitions, several categories of optimization problems may be defined. A Free Optimization Problem (FOP) is one for which no constraints exist. A Constraint Optimization Problem (COP) includes both constraints and a minimize (or maximize) condition(s) requirement. In contrast, a Constraint Satisfaction Problem (CSP) contains only constraints. Solving a CSP means finding one feasible solution within the search space that satisfies the constraint conditions. Solving a COP means finding a solution that is both feasible and optimal in the sense that a minimum (or maximum) value for the desired condition(s) is realized.

The solution to such a problem typically involves a mathematical search algorithm, whereby successively improved solutions are obtained over the course of a number of algorithm iterations. Each iteration, which can be thought of as a proposed solution, results in improvement of an objective function. An objective function is a mathematical expression having parameter values of a proposed solution as inputs. The objective function produces a figure of merit for the proposed solution. Comparison of objective function values provides a measure as to the relative strength of one solution versus another. Numerous search algorithms exist and differ in the manner by which the control variables for a particular problem are modified, whether a population of solutions or a single solution is tracked during the improvement process, and the assessment of convergence. However, these search algorithms rely on the results of an objective function in deciding a path of convergence. Examples of optimization algorithms include Genetic Algorithms, Simulated Annealing, and Tabu Search.

Within optimization algorithms, the critical issue of handling constraints for COPs and CSPs must be addressed. Several classes of methods exist for dealing with constraints. The most widespread method is the use of the penalty approach for modifying the objective function, which has the effect of converting a COP or CSP into a FOP. In this method, a penalty function, representing violations in the set of constraint equations, is added to an objective function characterizing the desired optimal condition. When the penalty function is positive, the solution is infeasible. When the penalty function is zero, all constraints are satisfied. Minimizing the modified objective function thus seeks not only optimality but also satisfaction of the constraints.

Objective functions take application specific forms, and therefore, each new problem or modification to a problem requires the construction of a new objective function. Furthermore, the objective function plays the important role of guiding an optimization algorithm to a possible best solution. Presumably, the better the objective function, the better the optimization result and/or the more efficient the optimization operation. Accordingly, a constant demand exists in the field of constraint based problems for improved objective functions.

The invention provides a systematic and general method and apparatus for defining an objective function for Constrained Optimization Problems (COPs), Constraint Satisfaction Problems (CSPs) and Free Optimization Problems (FOP), independent of the optimization search employed. The invention provides a generic definition of an objective function. Given the particular optimization problem (e.g., boiler water nuclear reactor core design, transportation scheduling, pressure water reactor core design, or any large scale, combinatorial optimization problem in discrete or continuous space), the objective function is configured following the generic definition.

Specifically, the generic definition of the objective function according to the present invention is a sum of credit components plus a sum of penalty components. Each credit component includes a credit term times an associated credit weight. Each penalty term includes a penalty term times an associated penalty weight. A credit term is a mathematical expression representing an optimization parameter, and a penalty term is a mathematical expression representing an optimization constraint.

Configuring an objective function involves establishing the number of credit and penalty components, establishing the mathematical expressions for the credit and penalty terms and establishing the initial weights of the credit and penalty weights. This is accomplished through user input or by accessing a previously stored configured objective function.

The configured objective function is then usable as part of an optimization process, or is usable a tool when a user assesses a candidate solution to an optimization problem. Because of the flexibility of the invention, changes in optimality conditions, constraint term definitions, and weight factors are readily accommodated.

The invention will now be described in greater detail, by way of example, with reference to the drawings, in which:-

Fig. 1 illustrates an embodiment of an architecture according to the present invention for implementing the method of evaluating a proposed solution according to the present invention;

Fig. 2 illustrates a screen shot of a optimization configuration page used in selecting one or more optimization parameters associated with the optimization problem of boiler water reactor core design according to an embodiment of the present invention;

Fig. 3 illustrates a screen shot of a optimization constraints page listing optimization constraints associated with the optimization problem of boiler water reactor core design according to an embodiment of the present invention; and

Fig. 4 illustrates a flow chart of an optimization process employing the objective function of the present invention.

The Generic Objective Function

The present invention provides a generic definition of an objective function, which is applicable across a wide variety of constraint and optimization problems. Namely, the generic objective function is applicable to any large scale, combinatorial optimization problem in discrete or continuous space such as boiler water reactor core design, pressurized water reactor core design, transportation scheduling, resource allocation, etc. The generic objective function is defined as a sum of credit and penalty components. A penalty component includes a penalty term multiplied by an associated penalty weight. A credit component includes a credit term multiplied by an associated credit weight. The credit terms represent the optimality conditions for the problem. The penalty terms represent the constraints for the problem. Each credit term is a mathematical expression that quantifies an optimality condition. Each penalty term is a mathematical expression that quantifies a constraint. Mathematically, this can be expressed as follows:

$$F_{obj} = \sum_m \lambda_m^{credit} C_m + \sum_n \lambda_n^{penalty} P_n$$

where,
$F_{obj}$ = objective function
$C_m$ = credit term $m$
$P_n$ = penalty term $n$
$\lambda_m^{credit}$ = weight factor credit term $m$
$\lambda_m^{penalty}$ = weight factor penalty term $n$

Credit and penalty terms may be defined by maximum (i.e. upper bounded) or minimum (i.e. lower bounded) values and can represent scalar or multidimensional values. The only requirements are: 1) the penalty terms must be positive for constraint violations and zero otherwise, and 2) in the absence of constraint violations, the credit terms are consistent with a minimization problem. Thus, minimizing the modified objective function solves the optimization problem.

As an example, consider an air-conditioning system where the optimization problem is to minimize the average air temperature within a room, yet assure that no region within the room exceeds a certain temperature. For this example, the credit would be the average air temperature within the room volume. The constraint would be a limit on the point-wise temperature distribution within the room, which, in the form of a penalty term, would be calculated as the average temperature violation. To obtain the average temperature violation one would sum the differences of actual and limiting temperature values for those points within the room that violate and divide by the total number of points. Alternatively, one could calculate the penalty term as the maximum value of the point-wise temperature violations within the room. The form of the generic objective function thus allows any number of credit and penalty terms to be defined in a general manner for the problem being solved.

Forms for the credit or penalty terms include, but are not limited to:

The maximum value within a data array;

The minimum value within a data array;

The average of values within a data array;

The integral of values within a data array;

The maximum of calculated differences between elements of a data array and the corresponding constraint limit, restricted to elements that violate;

The minimum of calculated differences between elements of a data array and the corresponding constraint limit, restricted to elements that violate;

The average of calculated differences between elements of a data array and the corresponding constraint limit, restricted to elements that violate; and

The integral of calculated differences between elements of a data array and the corresponding constraint limit, restricted to elements that violate.

A Generic Architecture for Implementing the Objective Function

Fig. 1 illustrates an embodiment of an architecture according to the present invention for implementing

the method of evaluating a proposed solution according to the present invention. As shown, a server 10 includes a graphical user interface 12 connected to a processor 14. The processor 14 is connected to a memory 16. The server 10 is directly accessible by a user input device 18 (e.g., a display, keyboard and mouse). The server 10 is also accessible by computers 22 and 26 over an intranet 20 and the Internet 26, respectively. The operation of the architecture shown in Fig. 1 will be discussed in detail below.

Configuring the Objective Function for an Optimization Problem

According to one embodiment, a configured objective function satisfying the above-described generic definition is already stored in the memory 16 of the server 10. For example, the configured objective function could have been configured according to one of the embodiments described below. In this embodiment, the user instructs the server 10 to provide a list of the configured objective functions stored in the memory 16, and instructs the server 10 to use one of the listed configured objective functions.

In another embodiment, a user via input 18, computer 26 or computer 22 accesses the server 10 over the graphical user interface 12. The user supplies the server 10 with a configured objective function meeting the definition of the above-described generic definition. In this embodiment, the user supplies the configured objective function using any well-known programming language or program for expressing mathematical expressions. Specifically, the user instructs the processor 14 via the graphical user interface 12 to upload a file containing the configured objective function. The processor 14 then uploads the file, and stores the file in memory 16.

In still another embodiment, configuring the objective function is interactive between the user and the server 10. Here, the user instructs the processor 14 to start the process for configuring an objective function. The processor 14 then requests the user to identify the number of credit components and the number of penalty components. For each credit component, the processor 14 requests that the user provide a mathematical expression for the credit term and an initial weight for the associated credit weight. For each penalty component, the processor 14 requests that the user provide a mathematical expression for the penalty term and an initial weight for the associated penalty weight. In supplying the mathematical expression, the processor 14 via the graphical user interface 12 accepts definitions of mathematical expressions according to any well-known programming language or program.

In another embodiment, the server 10 is preprogrammed for use on a particular constraint or optimization based problem. In this embodiment, the server 10 stores possible optimization parameters and possible constraint parameters associated with the particular optimization or constraint problem. When a user instructs the processor 14 via the graphical user interface 12 to configure an objective function, the processor 14 accesses the possible optimization parameters already stored in the memory 16, and provides the user with the option of selecting one or more of the optimization parameters for optimization.

Fig. 2 illustrates a screen shot of a optimization configuration page used in selecting one or more optimization parameters associated with the optimization problem of boiler water reactor core design according to this embodiment of the present invention. As shown, the optimization parameters 40 of optimize rod patterns, optimize core flow, and optimize sequence intervals are available for selection by the user as optimization parameters. Optimize rod patterns means making an optimal determination of individual control rod positions within a control rod grouping (called a sequence), for the duration of time during the operating cycle when the given sequence is being used to control the reactor. Rod positions affect the local power as well as the nuclear reaction rate. Optimize core flow means making an optimal determination of reactor coolant flow rate through the reactor as a function of time during the operating cycle. Flow rate affects global reactor power as well as the nuclear reaction rate. Optimize sequence intervals means making an optimal determination of the time duration a given sequence (i.e., control rod grouping) is used to control the reactor during the operating cycle. Sequence intervals affect local power as well as the nuclear reaction rate.

Using the data input device 18, computer 22 or computer 26, each of which includes a display and a computer mouse, the user selects one or more of the optimization parameters by clicking in the selection box 42 associated with an optimization parameter 40. When selected, a check appears in the selection box 42 of the selected optimization parameter. Clicking in the selection box 42 again de-selects the optimization parameter.

The memory 16 also stores constraint parameters associated with the optimization problem. The constraint parameters are parameters of the optimization problem that must or should satisfy a constraint or constraints. Fig. 3 illustrates a screen shot of a optimization constraints page listing optimization constraints associated with the optimization problem of boiler water reactor core design according to this embodiment of the present invention. As shown, each optimization constraint 50 has a design value 52 associated therewith. Each optimization constraint must fall below the specified design value. The user has the ability to select optimization parameters for consideration in configuring the objective function. Using the data input device 18, computer 22 or computer 26, each of which includes a display and a computer mouse, the user selects an optimization constraint by clicking in the selection box 54 associated with an optimization constraint 50. When selected, a check appears in the selection box 54 of the selected optimization constraint 50. Clicking in the selection box 54 again de-selects the optimization constraint.

Each optimization parameter has a predetermined credit term and credit weight associated therewith stored in memory 16. Similarly, each optimization constraint has a predetermined penalty term and penalty weight associated therewith stored in memory 16. In the embodiment shown in Fig. 3, the penalty term incorporates the design value, and the user can change (i.e., configure) this value as desired. Additionally, the embodiment of Fig. 3 allows the user to set an importance 56 for each optimization constraint 50. In the importance field 58 for an optimization constraint, the user has pull down options of minute, low, nominal, high and extreme. Each option correlates to an empirically predetermined penalty weight such that the greater the importance, the greater the predetermined penalty weight. In this manner, the user selects from among a set of predetermined penalty weights.

Once the above-selections have been completed, the processor 14 configures the objective function according to the generic definition discussed above and the selections made during the selection process. The resulting configured objective function equals the sum of credit components associated with the selected optimization parameters plus the sum of penalty components associated with the selected optimization constraints.

Additionally, the embodiment provides for the user to select a method of handling the credit and penalty weights. For example, the user is supplied with the possible methodologies of static, death penalty, dynamic, and adaptive for the penalty weights; is supplied with the possible methodologies of static, dynamic and adaptive for the credit weights; and the methodology of relative adaptive for both the penalty and credit weights. The well-known static methodology maintains the weights at their initially set values. The well-known death methodology sets each penalty weight to infinity. The well-known dynamic methodology adjusts the initial weight value during the course of the objective function's use in an optimization search based on a mathematical expression that determines the amount and/or frequency of the weight change. The well-known adaptive methodology is also applied during the course of an optimization search. In this method, penalty weight values are adjusted periodically for each constraint parameter that violates the design value. The relative adaptive methodology is disclosed in U.S. Application No. unknown, titled METHOD AND APPARATUS FOR ADAPTIVELY DETERMINING WEIGHT FACTORS WITHIN THE CONTEXT OF AN OBJECTIVE FUNCTION, by the inventors of the subject application, concurrently filed herewith.

Optimization using the Objective Function

Fig. 4 illustrates a flow chart showing one of the many uses for the objective function of the present invention. Specifically, Fig. 4 illustrates a flow chart of an optimization process employing the objective function of the present invention. For the purposes of explanation only, the optimization process of Fig. 4 will be described as being implemented by the architecture illustrated in Fig. 1. As shown, in step S10 the objective function is configured as discussed above in the preceding section, then the optimization process begins. In step S12, the processor 14 retrieves from memory 16 or generates one or more sets of values for input parameters (i.e., system inputs) of the optimization problem based on the optimization algorithm in use. For example, for the optimization problem of boiler water reactor core design, some of the input parameters would be placement of fresh and exposed fuel bundles within the reactor, selection of the rod groups (sequences) and placement of the control rod positions within the groups as a function of time during the cycle, core flow as a function of time during a cycle, reactor coolant inlet pressure, etc. Each input parameter set of values is a candidate solution of the optimization problem. The processor 14 runs a simulated operation and generates a simulation result for each input parameter set of values. For example, for boiler water reactor core design, a well-known simulation program for boiler water reactor operation is run using an input parameter set. The simulation result includes values (i.e., system outputs) for the optimization parameters and optimization constraints. These values, or a subset of these values, are values of the variables in the mathematical expressions of the objective function.

Then, in step S14, the processor 14 uses the objective function and the system outputs to generate an objective function value for each candidate solution. In step S16, the processor 14 assesses whether the optimization process has converged upon a solution using the objective function values generated in step S14. If no convergence is reached, then in step S18, the input parameter sets are modified, the optimization iteration count is increased and processing returns to step S12. The generation, convergence assessment and modification operations of steps S12, S16 and S18 are performed according to any well-known optimization algorithm such as Genetic Algorithms, Simulated Annealing, and Tabu Search. When the optimization problem is boiler water reactor core design, the optimization algorithm can be, for example, one of the optimization processes as disclosed in U.S. Application No. 09/475,309, titled SYSTEM AND METHOD FOR OPTIMIZATION OF MULTIPLE OPERATIONAL CONTROL VARIABLES FOR A NUCLEAR REACTOR filed December 30, 1999 or U.S. Application No. 09/683,004, tilted SYSTEM AND METHOD FOR CONTINUOUS OPTIMIZATION OF CONTROL-VARIABLES DURING OPERATION OF A NUCLEAR REACTOR, filed November 7, 2001.

The Objective Function as a Tool

Before the advent of fairly successful optimization tools, generating viable solutions to an optimization problem fell on the shoulders of highly experienced individuals, who through years of practice and experience in a particular field, developed a set of skills for generating possible solutions to the optimization problem. Even today such practices continue. However, these individuals still need a reliable method for assessing their solutions. The objective function of the present invention provides such a tool.

Referring again to Fig.1 for the purposes of explanation only, an individual desiring to apply an objective function according to the present invention accesses the server 10 via input 18, computer 26 or computer 22. The user then configures an objective function as described above; for example, the user accesses a previously stored configured objective function or configures the objective function through data entry. The user then supplies the values for the input variables of the objective function, and receives an objective function result. The user can perform this operation for different candidate solutions to obtain figures of merit regarding the solutions. In this manner, the user treats the objective function as a tool in determining a solution to the optimization problem.

The invention provides a systematic and general method for defining an objective function for Constrained Optimization Problems (COPs), Constraint Satisfaction Problems (CSPs) and Free Optimization Problems (FOP), independent of the optimization search employed. The invention provides a mechanism within the context of the penalty function approach for addressing: 1) any number of constraints and optimality conditions, 2) different mathematical forms for the credit and penalty terms and 3) any number of dimensions in the candidate solution data and constraints. The invention provides a prescription for encoding objective function definitions within an optimization search through a software data module. Because of the flexibility of the invention, changes in optimality conditions, constraint term definitions, and weight factors are readily accommodated within the calling program simply by changing the data passed to the software data module.

The technical effort of the invention is a computer system that provides for configuring an objective function for a given optimization problem; a computer system that generates a possible solution for a particular optimization problem; and a computer system that allows internal and external users to measure the performance of their possible solutions to an optimization problem.

For the sake of good order, various aspects of the invention are set out in the following clauses:-

1. A method of evaluating a proposed solution to a constraint problem, comprising:

   providing an objective function definition generic to constraint problems, the generic objective function definition being a sum of a first number of credit terms plus a sum of a second number of penalty terms;
   configuring the generic objective function into an application specific objective function applicable to the constraint problem;
   receiving a value of at least one variable in at least one credit term in the application specific objective function, the credit term variable being related to the proposed solution;
   receiving a value of at least one variable in at least one penalty term in the application specific objective function, the penalty term variable being related to the proposed solution; and
   generating a figure of merit for the proposed solution based on the credit term variable and the penalty term variable using the application specific objective function.

2 The method of clause 1, wherein the configuring step comprises:

   receiving a definition of at least one credit term; and
   receiving a definition of at least one penalty term.

3. The method of clause 2, wherein the received credit term definition has one of a fixed number of forms, and the received penalty term definition has one of a fixed number of forms.

4. The method of clause 1, wherein the configuring step comprises:

   storing a set of credit terms associated with the constraint problem, the set of credit terms including at least one credit term;
   storing a set of penalty terms associated with the constraint problem, the set of penalty terms including at least one penalty term;
   receiving input selecting at least one credit term from the set of credit terms; and
   receiving input selecting at least one penalty term from the set of penalty terms.

5. The method of clause 4, wherein the credit terms in the stored set of credit terms and the penalty terms in the stored set of penalty terms each correspond to forms in a fixed set of term forms.

6. The method of clause 1, wherein the receiving a value steps receive the credit and penalty term variable values from a user.

7. The method of clause 1, wherein the receiving a value steps receive the credit and penalty term variable values from a simulator.

8. The method of clause 1, wherein the providing step provides the following generic objective function definition $F_{obj}$,

$$F_{obj} = \sum_m \lambda_m^{credit} C_m + \sum_n \lambda_n^{penalty} P_n$$

where, $C_m$ is credit term m, $P_n$ is penalty term n, $\lambda_m^{credit}$ is a weight factor for credit term m, $\lambda_m^{penalty}$ is a weight factor for penalty term n, and m and n are integers greater than or equal to one.

9. The method of clause 8, wherein at least one of the credit and penalty weight factors is fixed.

10. The method of clause 8, wherein at least one of the credit and penalty weight factors is dynamically adjusted.

11. The method of clause 8, wherein at least one of the credit and penalty weight factors is adaptively adjusted.

12. The method of clause 8, further comprising receiving at least an initial value of the credit and penalty weight factors.

13. The method of clause 1, wherein the constraint problem relates to one of a boiling water reactor core design and a pressurized water reactor core design.

14. The method of clause 1, wherein the constraint problem relates to a large-scale, combinatorial optimization problem in discrete or continuous control variables.

15. An apparatus (10) for evaluating a proposed solution to a constraint problem, comprising:

a memory (16) storing an application specific objective function configured based on a generic objective function definition generic to constraint problems, the generic objective function definition being a sum of a first number of credit terms plus a sum of a second number of penalty terms;
an interface (12) receiving a value of at least one variable in at least one credit term of the application specific objective function and receiving a value of at least one variable in at least one penalty term of the application specific objective function, the credit term variable and the penalty term variable being related to the proposed solution; and
a processor (14) generating a figure of merit for the proposed solution based on the credit term variable and the penalty term variable using the application specific objective function.

16. The apparatus of clause 15, wherein the interface (12) is a graphical user interface.

17. The apparatus of clause 16, wherein the graphical user interface (12) interfaces with a user over one of an internet (24) or an intra-net (20).

18. The apparatus of clause 16, wherein
the graphical user interface (12) receives a definition of at least one credit term and at least one penalty term; and
the processor (14) configures the application specific objective function based on the received credit term definition, the received penalty term definition and the generic objective function definition, and stores the configured application specific objective function in the memory (16).

19. The apparatus of clause 18, wherein the received credit term definition has one of a fixed number of forms, and the received penalty term definition has one of a fixed number of forms.

20. The apparatus of clause 16, wherein
the memory (16) stores a set of credit terms associated with the constraint problem and stores a set of penalty terms associated with the constraint problem, the set of credit terms includes at least one credit term and the set of penalty terms includes at least on penalty term;
the graphical user interface (12) receives input selecting at least one credit term from the set of credit terms and selecting at least one penalty term from the set of penalty terms; and
the processor (14) configures the application specific objective function based on the selected credit term, the selected penalty term and the generic objective function definition, and stores the configured application specific objective function in the memory (16).

21. The apparatus of clause 20, wherein the credit terms in the stored set of credit terms and the penalty terms in the stored set of penalty terms each correspond to forms in a fixed set of term forms.

22. The apparatus of clause 15, wherein the memory (16) stores the following objective function def-

inition $F_{obj}$:

$$F_{obj} = \sum_m \lambda_m^{credit} C_m + \sum_n \lambda_n^{penalty} P_n$$

where, $C_m$ is credit term m, $P_n$ is penalty term n, $\lambda_m^{credit}$ is a weight factor for credit term m, $\lambda_m^{penalty}$ is a weight factor for penalty term n, and m and n are integers greater than or equal to one.

23. The apparatus of clause 22, wherein the memory (16) stores initial values of at least one of the credit and penalty weight factors.

24. The apparatus of clause 22, wherein the processor (14) dynamically adjusts at least one of the credit and penalty weight factors.

25. The apparatus of clause 22, wherein the processor (14) adaptively adjusts at least one of the credit and penalty weight factors.

26. The apparatus of clause 22, the interface (12) receives at least an initial value of the credit and penalty weight factors.

27. The apparatus of clause 15, wherein the constraint problem relates to one of a boiler water reactor core design and a pressurized water reactor core design.

28. The apparatus of clause 15, wherein the constraint problem relates to a large-scale, combinatorial optimization problem in discrete or continuous control variables.

29. A computer readable medium, comprising:

a code arrangement instructing a processor to provide an objective function definition generic to constraint problems, the generic objective function definition being a sum of a first number of credit terms plus a sum of a second number of penalty terms;
a code arrangement to configure the generic objective function into an application specific objective function applicable to the constraint problem;
a code arrangement to receive a value of at least one variable in at least one credit term in the application specific objective function, the credit term variable being related to the proposed solution;
a code arrangement to receive a value of at least one variable in at least one penalty term in the application specific objective function, the penalty term variable being related to the proposed solution; and
a code arrangement to generate a figure of merit for the proposed solution based on the credit term variable and the penalty term variable using the application specific objective function.

30. A method of generating a solution to an optimization problem, comprising:

generating at least one candidate solution;
generating an objective function value using a configured objective function, the configured objective function being configured from a generic objective function definition, the generic objective function definition being a sum of a first number of credit components plus a sum of a second number of penalty components, each credit component including a credit term and each penalty component including a penalty term; and
accessing convergence on a solution based on the objective function values.

31. The method of clause 30, further comprising configuring the generic objective function definition into the configured objective function.

32. A method of configuring an objective function, comprising:

providing an objective function definition generic to constraint problems, the generic objective function definition being a sum of a first number of credit terms plus a sum of a second number of penalty terms;
defining at least one credit term based on user input; and
defining at least one penalty term based on user input.

33. A method of evaluating a proposed solution to a nuclear reactor constraint problem, comprising:

providing an objective function definition generic to constraint problems, the generic objective function definition being a sum of a first number of credit terms plus a sum of a second number of penalty terms;
configuring the generic objective function into a nuclear reactor constraint problem objective function;
receiving a value of at least one variable in at least one credit term in the configured objective function, the credit term variable being related to the proposed solution;
receiving a value of at least one variable in at least one penalty term in the configured objective function, the penalty term variable being related to the proposed solution; and
generating a figure of merit for the proposed solution based on the credit term variable and the penalty term variable using the configured objective function.

## Claims

1. A method of evaluating a proposed solution to a constraint problem, comprising:

    providing an objective function definition generic to constraint problems, the generic objective function definition being a sum of a first number of credit terms plus a sum of a second number of penalty terms;
    configuring the generic objective function into an application specific objective function applicable to the constraint problem;
    receiving a value of at least one variable in at least one credit term in the application specific objective function, the credit term variable being related to the proposed solution;
    receiving a value of at least one variable in at least one penalty term in the application specific objective function, the penalty term variable being related to the proposed solution; and
    generating a figure of merit for the proposed solution based on the credit term variable and the penalty term variable using the application specific objective function.

2. The method of claim 1, wherein the configuring step comprises:

    receiving a definition of at least one credit term; and
    receiving a definition of at least one penalty term.

3. The method of claim 2, wherein the received credit term definition has one of a fixed number of forms, and the received penalty term definition has one of a fixed number of forms.

4. An apparatus (10) for evaluating a proposed solution to a constraint problem, comprising:

    a memory (16) storing an application specific objective function configured based on a generic objective function definition generic to constraint problems, the generic objective function definition being a sum of a first number of credit terms plus a sum of a second number of penalty terms;
    an interface (12) receiving a value of at least one variable in at least one credit term of the application specific objective function and receiving a value of at least one variable in at least one penalty term of the application specific objective function, the credit term variable and the penalty term variable being related to the proposed solution; and
    a processor (14) generating a figure of merit for the proposed solution based on the credit term variable and the penalty term variable using the application specific objective function.

5. The apparatus of claim 4, wherein the interface (12) is a graphical user interface.

6. A computer readable medium, comprising:

    a code arrangement instructing a processor to provide an objective function definition generic to constraint problems, the generic objective function definition being a sum of a first number of credit terms plus a sum of a second number of penalty terms;
    a code arrangement to configure the generic objective function into an application specific objective function applicable to the constraint problem;
    a code arrangement to receive a value of at least one variable in at least one credit term in the application specific objective function, the credit term variable being related to the proposed solution;
    a code arrangement to receive a value of at least one variable in at least one penalty term in the application specific objective function, the penalty term variable being related to the proposed solution; and
    a code arrangement to generate a figure of merit for the proposed solution based on the credit term variable and the penalty term variable using the application specific objective function.

7. A method of generating a solution to an optimization problem, comprising:

    generating at least one candidate solution;
    generating an objective function value using a configured objective function, the configured objective function being configured from a generic objective function definition, the generic objective function definition being a sum of a first number of credit components plus a sum of a second number of penalty components, each credit component including a credit term and each penalty component including a penalty term; and
    accessing convergence on a solution based on

the objective function values.

8. The method of claim 7, further comprising configuring the generic objective function definition into the configured objective function.

9. A method of configuring an objective function, comprising:

providing an objective function definition generic to constraint problems, the generic objective function definition being a sum of a first number of credit terms plus a sum of a second number of penalty terms;
defining at least one credit term based on user input; and
defining at least one penalty term based on user input.

10. A method of evaluating a proposed solution to a nuclear reactor constraint problem, comprising:

providing an objective function definition generic to constraint problems, the generic objective function definition being a sum of a first number of credit terms plus a sum of a second number of penalty terms;
configuring the generic objective function into a nuclear reactor constraint problem objective function;
receiving a value of at least one variable in at least one credit term in the configured objective function, the credit term variable being related to the proposed solution;
receiving a value of at least one variable in at least one penalty term in the configured objective function, the penalty term variable being related to the proposed solution; and
generating a figure of merit for the proposed solution based on the credit term variable and the penalty term variable using the configured objective function.

FIG. 1

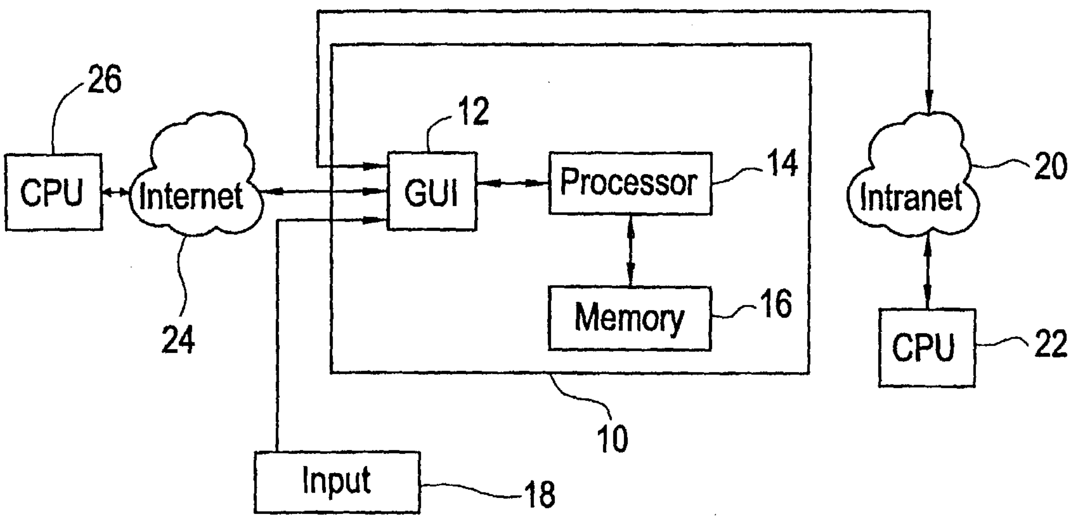
26
CPU
Internet
24
12
GUI
Processor
14
Memory
16
10
Input
18
Intranet
20
CPU
22

FIG. 4

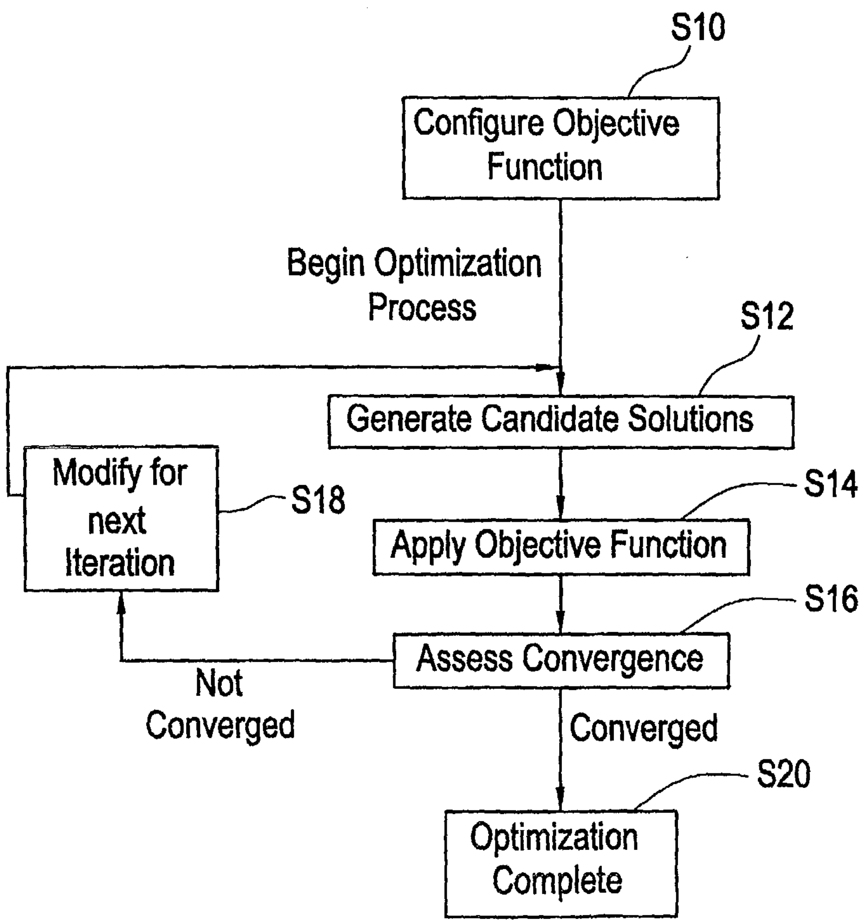
S10
Configure Objective Function
Begin Optimization Process
S12
Generate Candidate Solutions
S14
Apply Objective Function
S16
Assess Convergence
Modify for next Iteration
S18
Not Converged
Converged
S20
Optimization Complete

FIG. 2

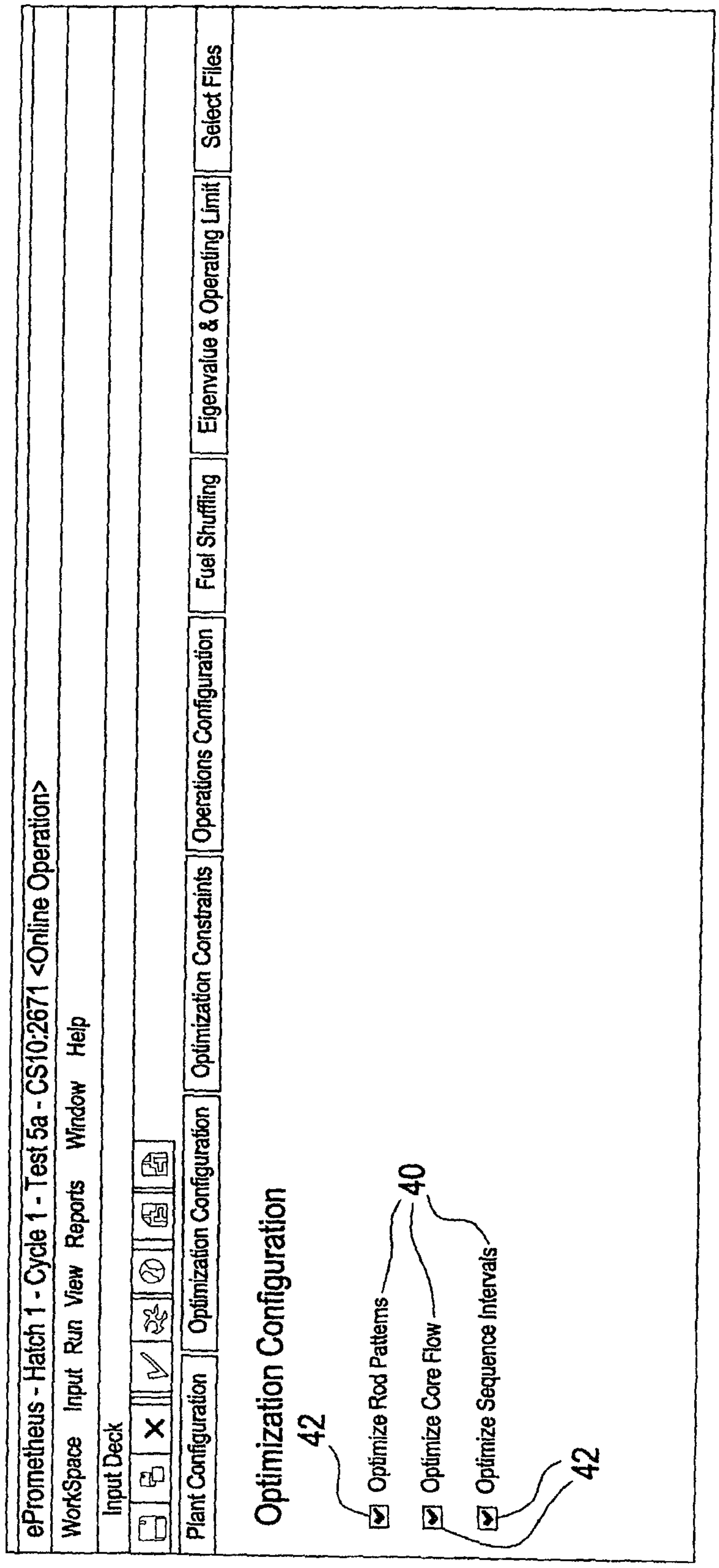

ePrometheus - Hatch 1 - Cycle 1 - Test 5a - CS10:2671 <Online Operation>
WorkSpace Input Run View Reports Window Help
Input Deck
Plant Configuration
Optimization Configuration
Optimization Constraints
Operations Configuration
Fuel Shuffling
Eigenvalue & Operating Limit
Select Files
Optimization Configuration
42
Optimize Rod Patterns
Optimize Core Flow
Optimize Sequence Intervals
40
42

FIG. 3

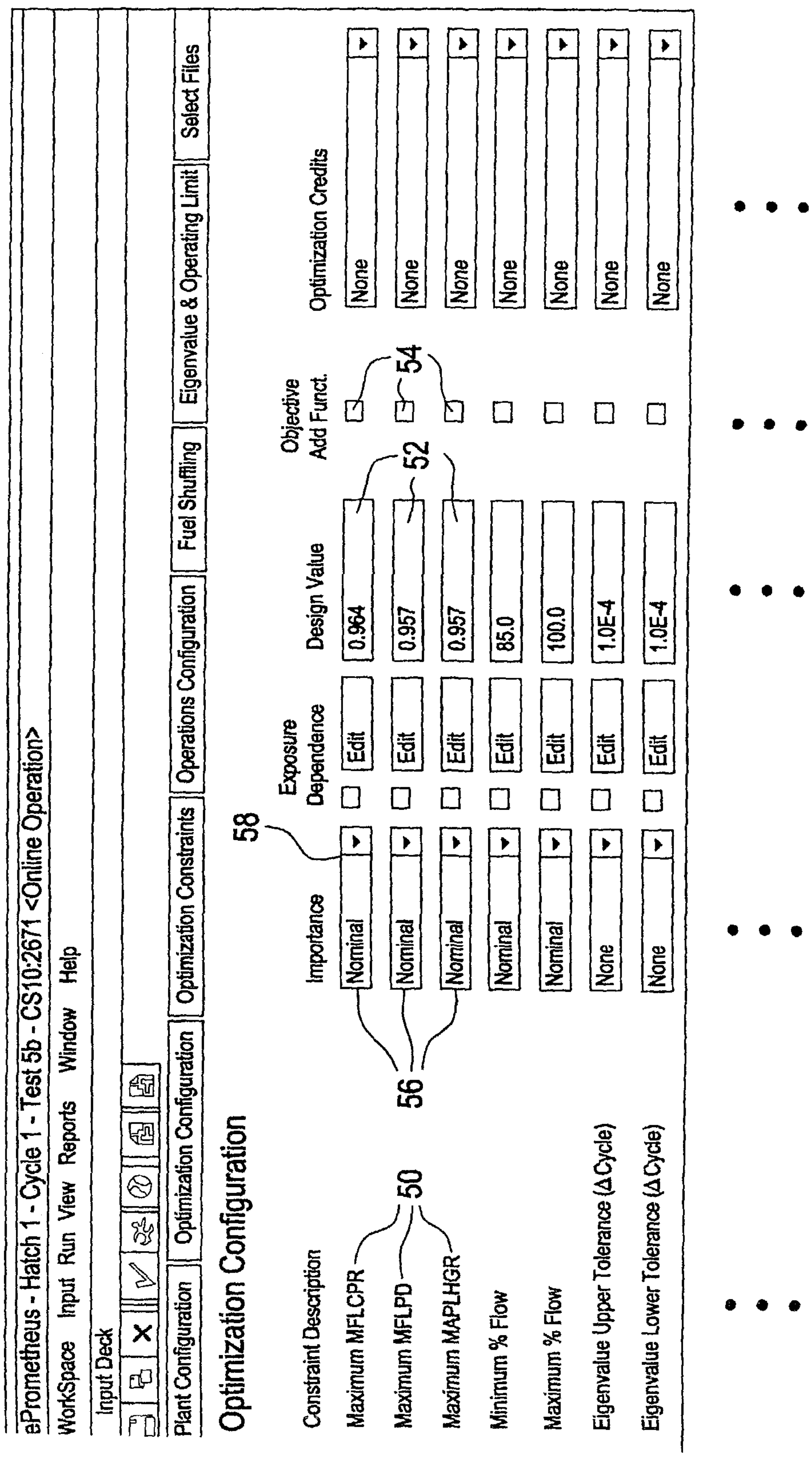

ePrometheus - Hatch 1 - Cycle 1 - Test 5b - CS10:2671 <Online Operation>
WorkSpace Input Run View Reports Window Help
Input Deck
Plant Configuration
Optimization Configuration
Optimization Constraints
Operations Configuration
Fuel Shuffling
Eigenvalue & Operating Limit
Select Files
Optimization Configuration
Constraint Description
Importance
Exposure Dependence
Design Value
Objective Add Funct.
Optimization Credits
Maximum MFLCPR
Maximum MFLPD
Maximum MAPLHGR
Minimum % Flow
Maximum % Flow
Eigenvalue Upper Tolerance (ΔCycle)
Eigenvalue Lower Tolerance (ΔCycle)
Nominal
None
Edit
0.964
0.957
0.957
85.0
100.0
1.0E-4
1.0E-4
50
52
54
56
58

European Patent Office

# DECLARATION

which under Rule 45 of the European Patent Convention shall be considered, for the purposes of subsequent proceedings, as the European search report

Application Number EP 03 25 5875

| The Search Division considers that the present application, does not comply with the provisions of the EPC to such an extent that it is not possible to carry out a meaningful search into the state of the art on the basis of all claims | CLASSIFICATION OF THE APPLICATION (Int.Cl.7) |
|---|---|
| Reason: | G06F17/60 |

The claims relate to subject matter excluded from patentability under Art. 52(2) and (3) EPC. Given that the claims are formulated in terms of such subject matter or merely specify commonplace features relating to its technological implementation, the search examiner could not establish any technical problem which might potentially have required an inventive step to overcome. Hence it was not possible to carry out a meaningful search into the state of the art (Rule 45 EPC). See also Guidelines Part B Chapter VIII, 1-6.

The applicant's attention is drawn to the fact that a search may be carried out during examination following a declaration of no search under Rule 45 EPC, should the problems which led to the declaration being issued be overcome (see EPC Guideline C-VI, 8.5).

-----

| Place of search | Date | Examiner |
|---|---|---|
| Munich | 13 February 2004 | Stenger, M |

EPO FORM 1504 (P04C37)